# EUROPÄISCHE PATENTANMELDUNG

(11) **EP 2 548 694 A1**
(43) Veröffentlichungstag der Anmeldung: **23.01.2013**
(21) Anmeldenummer: 12005265.9
(22) Anmeldetag: 18.07.2012
(51) Int. Cl.: B23Q 3/08, B25B 1/24, B23Q 3/06

(54) **Verfahren und Vorrichtung zum Spannen eines Werkstücks**

(30) Priorität: 20.07.2011 DE 102011108119
(71) Anmelder: MTU Aero Engines GmbH, 80995 München (DE)
(72) Erfinder: Stiehler, Frank, 04924 Bad Liebenwerda (DE); Schneefeld, Dieter, 85253 Walkertshofen (DE); Sikorski, Siegfried, 80997 München (DE); Dietsche, Andreas, 81375 München (DE)

(57) **Zusammenfassung**

Die vorliegende Erfindung betrifft ein Verfahren zum Spannen eines Werkstücks (1) mit wenigstens einem Spannelement (2), wobei in einem vorgeformten Einsatzelement (3), das zwischen Werkstück und Spannelement angeordnet ist, bei eingespanntem Werkstück wenigstens lokal die Fließgrenze überschritten ist, und wobei ein Fließen des Einsatzelementes wenigstens bereichsweise durch einen, insbesondere wenigstens im Wesentlichen ebenen, Kontakt (4) zwischen Werkstück und Spannelement begrenzt wird.

## Beschreibung

Die vorliegende Erfindung betrifft ein Verfahren zum Spannen eines Werkstücks, insbesondere eines Bauteils einer Turbomaschine, mit einem Spannelement sowie eine Spannvorrichtung zur Durchführung eines solchen Verfahrens.

Werkstücke werden bisher hart oder weich gespannt. Beim Hartspannen wird das Werkstück von einem oder mehreren Spannelementen mit harter Oberfläche druckbeaufschlagt. Hierdurch können große Spannkräfte übertragen werden. Allerdings kommt es aufgrund von Formtoleranzen zwischen Werkstück und Spannelement(en) dabei häufig zu kleinen, oft punkt- oder linienförmigen Kontakten mit entsprechenden lokalen Druckspannungsspitzen, die zu einer Beschädigung der Werkstückoberfläche führen können. Beim Weichspannen verformt sich hingegen die weiche Oberfläche der Spannelemente elastisch, so dass sich eine gleichmäßigere Druckverteilung einstellt. Allerdings können dabei nur geringere Spannkräfte übertragen werden.

Aus der DE 195 47 952 A1 ist eine Spannvorrichtung für eine Turbinenschaufel mit Formspannbacken bekannt, in denen eine Heizvorrichtung angeordnet ist, die ein Füllmaterial verflüssigt, so dass sich die Formspannbacken beim Abkühlen und Erstarren des Füllmaterials an die Form der Turbinenschaufel anpassen. Um Schaufeln mit derselben Sollkontur zu spannen, wird nur noch eine kleinere Schnellheizzone verflüssigt, um geringe Formtoleranzen auszugleichen. Dabei wird stets mit wieder erstarrten Formspannbacken, d.h. hart gespannt, wobei durch die Abformung ein im Wesentlichen flächiger Kontakt zwischen Schaufel und Formspannbacken erreicht werden soll. Insofern stellt diese Lösung eine Kombination aus Hartspannen und dem ebenfalls bekannten Eingießen von Werkstücken in eine verlorene Spannvorrichtung aus niedrigschmelzendem Metall dar.

Aufgabe der vorliegenden Erfindung ist es, ein Werkstück besser zu spannen.

Zur Lösung dieser Aufgabe ist ein Verfahren nach dem Oberbegriff des Anspruchs 1 durch dessen kennzeichnendes Merkmal weitergebildet. Anspruch 10 stellt eine Spannvorrichtung unter Schutz, die zur Durchführung eines erfindungsgemäßen Verfahrens eingerichtet ist, Anspruch 11 ein Werkstück, welches erfindungsgemäß gespannt worden ist. Die Unteransprüche betreffen vorteilhafte Weiterbildungen.

Die vorliegende Erfindung ist insbesondere zum Spannen von Werkstücken mit Freiformflächen bzw. ein- oder mehrfach gekrümmten Flächen und/oder mit ebenen Bereichen, geeignet, wie sie etwa Einzelschaufeln oder Schaufelanordnungen mit gewundenen Schaufelblättern und wenigstens bereichsweise ebenen Deckbändern, Schaufelplattformen und/oder Schaufelfüßen darstellen.

Allgemein wird nach der vorliegenden Erfindung ein Werkstück mit einem oder mehreren Spannelementen gespannt, indem eines oder mehrere der Spannelemente gegen das Werkstück zugestellt werden, bis sie einander und/oder das Werkstück berühren, und anschließend eine Spannkraft aufgebracht wird, die vorzugsweise wenigstens so groß wie eine maximale Reaktionskraft infolge einer Werkstückbearbeitung ist. Die Spannkraft kann insbesondere hydraulisch, pneumatisch, (elektro)magnetisch und/oder (elektro)motorisch auf das bzw. die Spannelemente aufgeprägt werden. Werkstück und/oder Spannelement(e) können vorzugsweise ganz oder teilweise aus Metall hergestellt sein. Bevorzugt weisen ein oder mehrere Spannelemente harte Kontaktflächen zum Spannen des Werkstückes auf. Diese können sich aus dem Material des Spannelementes und/oder einer Oberflächenbehandlung, insbesondere Beschichtung und/oder, insbesondere thermischen, Härtung ergeben. In einer bevorzugten Ausführung weist eine Kontaktfläche zum Spannen des Werkstückes eine Härte von wenigstens 50 HRC, vorzugsweise wenigstens 60 HRC auf.

Erfindungsgemäß werden beim Spannen ein oder mehrere separate vorgeformte Einsatzelemente zwischen Werkstück und Spannelement(en) angeordnet. Ein Einsatzelement kann vorzugsweise ganz oder teilweise aus Kunststoff, insbesondere einem thermoplastischen Kunststoff, und/oder Filz hergestellt sein. Es kann in einer bevorzugten Ausführung vor dem Spannen an wenigstens einem Spannelement und/oder dem Werkstück stoff-, form- und/oder reibschlüssig befestigt, insbesondere auf- oder eingesteckt und/oder aufgeklebt werden.

Im Gegensatz zu einem weichen Spannen, bei dem eine Oberfläche eines Spannelementes oder eines zwischengeschalteten Einsatzelementes rein elastisch nachgibt oder sich plastisch entspannt, wird erfindungsgemäß in wenigstens einem Einsatzelement bei eingespanntem Werkstück vollständig oder lokal die Fließgrenze überschritten. Dadurch stellt sich, wenigstens lokal, bei eingespanntem Werkstück ein quasi hydrostatischer mehrdimensionaler Druck- bzw. Spannungszustand in dem Einsatzelement ein, so dass dieses das Werkstück homogen kontaktiertdas Werkstück "schwimmt" sozusagen in dem fließenden Einsatzelement. Dieses vollständige oder Bereichsfließen kann insbesondere durch Aufprägung einer ausreichend hohen Spannkraft erreicht werden. Zusätzlich oder alternativ kann das Einsatzelement, insbesondere durch eine Heizeinrichtung, thermisch beaufschlagt, d.h. erwärmt werden.

Um bei eingespanntem Werkstück die Fließgrenze des Einsatzelementes zu überschreiten und ein übermäßiges Entspannen des Einsatzelementes und damit ein vollständiges Unterschreiten der Fließgrenze zu vermeiden oder ausreichend lange zu verzögern, wird erfindungsgemäß ein Fließen des Einsatzelementes über dessen gesamter Außenkontur oder wenigstens einem Bereich der Außenkontur durch einen, insbesondere wenigstens im Wesentlichen ebenen, Kontakt zwischen Werkstück und Spannelement begrenzt.

Erfindungsgemäß wird damit ein Hartspannen des Werkstückes durch den ein- oder mehrflächigen Kontakt mit einem oder mehreren Spannelementen mit einer Lagerung in einem wenigstens lokal fließenden Einsatzelement kombiniert, wobei der Kontakt zwischen Werkstück und Spannelement(en) als Dichtung für das Bereichsfließen des Einsatzelementes oder der Einsatzelemente fungiert. Diese Lagerung kann einerseits aufgrund des quasi hydrostatischen Druckzustandes des Einsatzelementes hohe Kräfte übertragen und schont andererseits aufgrund der wenigstens lokal homogenen Druckverteilung die Oberfläche des Werkstücks.

Unter der Fließgrenze wird vorliegend in fachüblicher Weise diejenige Spannung verstanden, ab der sich eine plastische bzw. bleibende Verformung des Einsatzelementes einstellt, insbesondere die sogenannte Quetschgrenze bzw. der Wert R_{(p)0,2} oder σ_{(p)0,2}.

Erfindungsgemäß ist ein Einsatzelement vorgeformt. Insbesondere kann es entsprechend einer Kontur von Werkstück und/oder Spannelement vorgeformt sein: kontaktieren Werkstück und Spannelement einander, wird ein durch den ein- oder mehrflächigen Kontakt zwischen Werkstück und Spannelement begrenzter Hohlraum gebildet. Ein Einsatzelement kann nun komplementär zu diesem Hohlraum oder einem Teil dieses Hohlraumes vorgeformt sein. Durch ein solches konturnahes Einsatzelement kann die erforderliche Deformation des Einsatzelementes beim Spannen reduziert werden.

In einer bevorzugten Weiterbildung ist ein Einsatzelement entsprechend einer theoretischen oder Sollkontur von Werkstück und/oder Spannelement vorgeformt, wobei es demgegenüber vorzugsweise, wenigstens bereichsweise, ein Übermaß, aufweisen kann. Dieses Übermaß beträgt in einer bevorzugten Ausführung maximal 15 %, vorzugsweise maximal 10 % und besonders bevorzugt maximal 5 %, und/oder wenigstens 5% mm, vorzugsweise wenigstens 10 % und besonders bevorzugt wenigstens 15 % einer theoretischen oder Sollwandstärke des Einsatzelements. Absolut gesehen kann das Übermaß in einer bevorzugten Ausführung insbesondere maximal 2 mm, vorzugsweise maximal 1 mm und besonders bevorzugt maximal 0,5 mm, und/oder wenigstens 0,01 mm, vorzugsweise wenigstens 0,1 mm und besonders bevorzugt wenigstens 0,5 mm betragen. Vorteilhafterweise wird das Übermaß entsprechend einer maximal zulässigen oder auftretenden Toleranz derart gewählt, dass auch bei dem größten Hohlraum zwischen Werkstück und Spannelement noch eine zum vollständigen oder Bereichsfließen des Einsatzelementes ausreichende Kompression des Einsatzelementes erfolgt. Insbesondere kann das Übermaß wenigstens das Doppelte, insbesondere wenigstens das Dreifache und vorzugsweise wenigstens das Zehnfache einer maximalen Toleranz von Werkstück und/oder Spannelement betragen. Beträgt beispielsweise eine zulässige Toleranz eines Werkstückes im Spannbereich 0,1 mm, die des Spannelementes 0,2 mm, so kann das Einsatzelement gegenüber dem in der Sollkonfiguration durch Werkstück und Spannelement gebildeten Hohlraum ein Übermaß von 5 × max(0,1 mm, 0,2 mm) = 5 × 0,2 mm =1 mm betragen.

In einer Ausführung der vorliegenden Erfindung kann der Hohlraum, der bei eingespanntem Werkstück zwischen Werkstück und Spannelement ausgebildet ist, durch ein Einsatzelement teilweise ausgefüllt sein, so dass ein Freiraum verbleibt, in dem keine Spannkräfte auf das Werkstück übertragen werden. Gleichwohl kann in dem Einsatzelement wenigstens lokal die Fließgrenze überschritten werden. Dem steht auch ein teilweiser Austritt überschüssigen Einsatzelementmaterials aus dem Hohlraum zwischen Werkstück und Spannelement, für den in einer bevorzugten Ausführung ein oder mehrere Kanäle vorgesehen sind, die insbesondere mit der Umgebung oder einem Einsatzelementmaterialreservoir kommunizieren können, nicht entgegen, insbesondere, wenn die Kanäle eine ausreichende Drosselwirkung auf das fließende bzw. austretende Einsatzelement ausüben. Allgemein kann es für ein erfindungsgemäßes Spannen sowohl durch den (Hart)Kontakt zwischen Werkstück und Spannelement als auch durch das im Einsatzelement "schwimmende" Werkstück ausreichen, wenn, wenigstens lokal, die Fließgrenze dauerhaft oder über einen vorgegebenen Zeitraum, insbesondere wenigstens während einer Bearbeitung des gespannten Werkstückes, überschritten ist. In einer bevorzugten Ausführung wird das Einsatzelement durch eine entsprechende Spannkraft und/oder thermisch daher wenigstens während einer Bearbeitung des gespannten Werkstückes, vorzugsweise auch davor und danach, über seine Fließgrenze beaufschlagt, was beides als "bei eingespanntem Werkstück" bezeichnet wird.

Eine erfindungsgemäße Spannvorrichtung ist zur Durchführung eines erfindungsgemäßen Verfahrens insbesondere dadurch eingerichtet, dass sie ein entsprechendes, vorgeformtes Einsatzelement aufweist und eine ausreichende thermische Beaufschlagung und/oder Spannkraft aufbringt. Hierzu können allgemein eine, insbesondere elektrische und/oder fluidische, Heizeinrichtung, insbesondere in wenigstens einem Spannelement, und/oder ein, insbesondere hydraulischer, pneumatischer, (elektro)magnetischer und/oder (elektro)motorischer Stellantrieb für das bzw. die Spannelemente mit einer entsprechend eingerichteten Steuerung vorgesehen sein.

Weitere Merkmale und Vorteile ergeben sich aus den Unteransprüchen und den Ausführungsbeispielen. Hierzu zeigt, teilweise schematisiert:
- Fig. 1:: Teile eines Werkstücks und einer Spannvorrichtung gemäß einer Ausführung der vorliegenden Erfindung im Querschnitt; und
- Fig. 2:: die Spannvorrichtung der Fig. 1 mit gespanntem Werkstück.

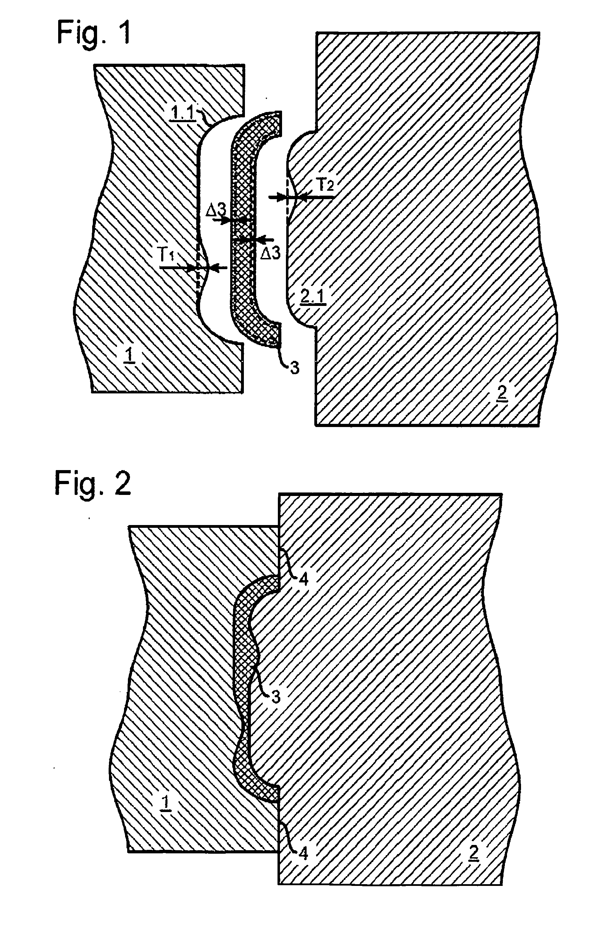

Fig. 1 zeigt im Querschnitt schematisiert einen Teil einer metallischen Schaufel 1 eines Flugtriebwerkes, beispielsweise einer Blisk. Eine Freiformfläche dieser Schaufel 1 weist eine Toleranz T₁, d.h. eine Abweichung gegenüber einer in Fig. 1 strichliert angedeuteten Sollkontur auf.

Zum Spannen dieser Schaufel 1 weist eine Spannvorrichtung ein Spannelement 2 aus oberflächengehärtetem Stahl auf, das die Schaufel bei in Fig. 1 horizontaler Zustellung gegen ein (in Fig. 1 nicht gezeigtes) Gegenlager, beispielsweise ein weiteres Spannelement spannt. Das Spannelement 2 weist ebenfalls eine Toleranz T₂, d.h. eine Abweichung gegenüber einer in Fig. 1 strichliert angedeuteten Sollkontur auf.

Berühren Werkstück 1 und Spannelement 2 einander bei eingespanntem Werkstück in einem Kontakt 4 (vgl. Fig. 2), so bildet sich zwischen ihnen ein Hohlraum aus, der im Ausführungsbeispiel entlang seines gesamten Umfangs durch den Kontakt 4 zwischen Werkstück 1 und Spannelement 2 begrenzt ist.

Erfindungsgemäß ist bei eingespanntem Werkstück 1 zwischen diesem und dem Spannelement 2 ein Einsatzelement 3 aus thermoplastischem Kunststoff angeordnet, welches komplementär zu diesem Hohlraum, d.h. entsprechend der Kontur von Werkstück und Spannelement vorgeformt ist. Wie in Fig. 1 angedeutet, wird das Einsatzelement 3 entsprechend der Sollkontur (strichliert in Fig. 1) mit Übermaß Δ3 vorgeformt.

Wird nun das Werkstück 1 durch das Spannelement 2 gespannt, indem dieses mit einer vorgegebenen Spannkraft (horizontal in Fig. 2) gegen das Werkstück gepresst wird, wird das das Übermaß Δ3 aufweisende Einsatzelement 3 komprimiert (vgl. Fig. 2). Das Übermaß Δ3 ist so gewählt, dass bei einander im Kontakt 4 berührendem Werkstück und Spannelement im Einsatzelement 3 wenigstens lokal dessen Fließgrenze überschritten ist. Dadurch stellt sich ein quasi hydrostatischer Druck- bzw. Spannungszustand im gesamten Einsatzelement 3 oder wenigstens bereichsweise ein, so dass dieses hohe Spannkräfte homogen auf das Werkstück 1 übertragen kann. Im Ausführungsbeispiel beträgt das Übermaß Δ3 das Doppelte der maximal zulässigen Toleranz max(T₁,T₂), wobei in Fig. 1 die Toleranzen nur zur Verdeutlichung übergroß dargestellt sind. Das Übermaß Δ3 beträgt einige 1/10 mm.

Der ebene Kontakt 4 zwischen Werkstück 1 und Spannelement 2 begrenzt über den gesamten Umfang des Einsatzelementes 3 ein Fließen des Einsatzelementes und verhindert oder verzögert so dessen Entspannung unter seine Fließgrenze, d.h. hält den quasi hydrostatischen Druck- bzw. Spannungszustand, wenigstens während einer Bearbeitung des gespannten Werkstückes 1, aufrecht.

Nach dem Öffnen des Spannelementes (Fig. 2 → Fig. 1) kann das Werkstück 1 und das Einsatzelement 3 entnommen werden. Das deformierte Einsatzelement 3 kann in diesem deformierten Zustand zum Spannen eines weiteren Werkstückes, insbesondere mit gleicher Sollkontur, wieder verwendet werden. Gleichermaßen kann es, insbesondere thermoplastisch, wieder - insbesondere entsprechend einer Sollkontur - vorgeformt oder durch ein neues, vorgeformtes Einsatzelement ersetzt werden.

Zur Fixierung des Einsatzelementes 3 beim Zustellen des Spannelementes 2 kann es auf dessen Vorsprung auf- oder in die Aussparung der Schaufel 1 eingesteckt werden.

### Bezugszeichenliste

- 1: Turbinenschaufel (Werkstück)
- 2: Spannelement
- 3: Einsatzelement
- 4: Kontakt
- T₁, T₂: Toleranz
- Δ3: Übermaß

## Patentansprüche

1. Verfahren zum Spannen eines Werkstücks (1) mit wenigstens einem Spannelement (2);
**dadurch gekennzeichnet, dass**
in einem separaten vorgeformten Einsatzelement (3), das zwischen Werkstück und Spannelement angeordnet ist, bei eingespanntem Werkstück wenigstens lokal die Fließgrenze überschritten ist, wobei ein Fließen des Einsatzelementes wenigstens bereichsweise durch einen, insbesondere wenigstens im Wesentlichen ebenen, Kontakt (4) zwischen Werkstück und Spannelement begrenzt wird.

2. Verfahren nach Anspruch 1, **dadurch gekennzeichnet, dass** ein entsprechend einer Kontur von Werkstück und/oder Spannelement vorgeformtes Einsatzelement (3) zwischen Werkstück und Spannelement angeordnet wird.

3. Verfahren nach Anspruch 2, **dadurch gekennzeichnet, dass** das vorgeformte Einsatzelement, wenigstens bereichsweise ein Übermaß (Δ3), insbesondere entsprechend einer Toleranz (T₁, T₂), aufweist.

4. Verfahren nach Anspruch 3, **dadurch gekennzeichnet, dass** das Übermaß (Δ3) höchstens 2 mm, insbesondere höchstens 1 mm und vorzugsweise höchstens 0,5 mm beträgt.

5. Verfahren nach einem der vorhergehenden Ansprüche 2 bis 3, **dadurch gekennzeichnet, dass** das Übermaß (Δ3) wenigstens das Doppelte, insbesondere wenigstens das Dreifache und vorzugsweise wenigstens das Zehnfache einer maximalen Toleranz von Werkstück und/oder Spannelement beträgt.

6. Verfahren nach Anspruch 3, **dadurch gekennzeichnet, dass** das Übermaß (Δ3) höchstens 15 %, insbesondere höchstens 10 % und vorzugsweise höchstens 5 % beträgt.

7. Verfahren nach einem der vorhergehenden Ansprüche, **dadurch gekennzeichnet, dass** ein Hohlraum, der bei eingespanntem Werkstück zwischen Werkstück und Spannelement ausgebildet ist, durch ein Einsatzelement nur teilweise ausgefüllt ist.

8. Verfahren nach einem der vorhergehenden Ansprüche, **dadurch gekennzeichnet, dass** bei eingespanntem Werkstück ein Einsatzelement teilweise, insbesondere durch wenigstens einen Kanal, austritt.

9. Verfahren nach einem der vorhergehenden Ansprüche, **dadurch gekennzeichnet, dass** die Fließgrenze eines Einsatzelementes durch thermische und/oder Beaufschlagung durch eine Spannkraft überschritten wird.

10. Verfahren nach einem der vorhergehenden Ansprüche, **dadurch gekennzeichnet, dass** das Werkstück und/oder ein Spannelement wenigstens teilweise aus Metall und/oder ein Einsatzelement wenigstens teilweise aus Kunststoff, insbesondere einem thermoplastischen Kunststoff, und/oder Filz hergestellt ist.

11. Spannvorrichtung zum Spannen eines Werkstücks (1), mit wenigstens einem Spannelement (2) und wenigstens einem vorgeformten Einsatzelement (3), wobei die Spannvorrichtung zur Durchführung eines Verfahrens nach einem der vorhergehenden Ansprüche eingerichtet ist.

12. Werkstück, insbesondere Bauteil einer Turbomaschine, vorzugsweise Schaufel (1) oder Schaufelanordnung für eine Gasturbine, **dadurch gekennzeichnet, dass** das Werkstück während der Herstellung und/oder Wartung in einer Spannvorrichtung (2, 3) nach Anspruch 11 mittels eines Verfahrens nach einem der vorhergehenden Ansprüche 1 bis 10 eingespannt worden ist.
